Europäisches Patentamt

European Patent Office

Office européen des brevets

(19)

(11) Veröffentlichungsnummer: **0 166 031**
A1

## (12) EUROPÄISCHE PATENTANMELDUNG

(21) Anmeldenummer: 84115582.3

(22) Anmeldetag: 17.12.84

(51) Int. Cl.⁴: **G 11 B 5/127**, G 11 B 5/31,
G 11 B 5/17

(30) Priorität: 25.05.84 DE 3419650

(43) Veröffentlichungstag der Anmeldung: 02.01.86
Patentblatt 86/1

(84) Benannte Vertragsstaaten: AT CH DE FR GB IT LI NL SE

(71) Anmelder: Siemens Aktiengesellschaft, Berlin und
München Wittelsbacherplatz 2, D-8000 München 2 (DE)

(72) Erfinder: Schewe, Herbert, Dr., Haydnstrasse 58,
D-8522 Herzogenaurach (DE)

(54) Dünnschicht-Magnetkopf zum Schreiben und Lesen für ein senkrecht zu magnetisierendes Aufzeichnungsmedium.

㊗ Der Dünnschicht-Magnetkopf zum Schreiben und Lesen mit einem schichtweisen Aufbau auf einem nichtmagnetischen Substrat für ein senkrecht (vertikal) zu magnetisierendes Aufzeichnungsmedium enthält einen den magnetischen Fluß führenden ringkopfähnlichen Leitkörper mit zwei Magnetschenkeln, deren dem Aufzeichnungsmedium zugewandten Pole in Bewegungsrichtung des Kopfes gesehen hintereinander und mit vorbestimmtem Abstand zueinander angeordnet sind und die einen Zwischenraum begrenzen, durch welchen sich die Windungen einer zumindest weitgehend flachen Spulenwicklung erstrecken. Dieser Magnetkopf soll bei verhältnismäßig einfachem Aufbau eine schaltbare Schreib-und Lesefunktion mit hohem Wirkungsgrad ermöglichen, insbesondere eine große Lesespannung hervorrufen. Erfindungsgemäß ist hierzu vorgesehen, daß der den magnetischen Fluß führende Leitkörper (6) außer dem von den beiden Magnetschenkeln (7, 8) ausgebildeten ringkopfähnlichen Kopfteil (9) einen über den dem Aufzeichnungsmedium (M) gegenüberliegenden Bereich (14) dieses Kopfteiles (9) hinausragenden zusätzlichen Schenkelteil (16) enthält und daß außer der nur für die Lesefunktion dienenden Spulenwicklung (18) eine zusätzliche Spulenwicklung (20) nur für die Schreibfunktion vorgesehen ist, deren Windungen lediglich dem zusätzlichen Schenkelteil (16) zugeordnet sind.

SIEMENS AKTIENGESELLSCHAFT          Unser Zeichen
Berlin und München                  VPA 84 P 3 1 91 E


Dünnschicht-Magnetkopf zum Schreiben und Lesen für ein
senkrecht zu magnetisierendes Aufzeichnungsmedium

Die Erfindung bezieht sich auf einen Dünnschicht-Magnetkopf zum Schreiben und Lesen mit einem schichtweisen
Aufbau auf einem nicht-magnetischen Substrat für ein
Aufzeichnungsmedium, das mit einer magnetisierbaren
Speicherschicht versehen ist, in welche längs einer
Spur Informationen durch senkrechte (vertikale) Magnetisierung einzuschreiben sind, welcher Magnetkopf einen
den magnetischen Fluß führenden ringkopfähnlichen Leitkörper mit zwei Magnetschenkeln aufweist, deren dem
Aufzeichnungsmedium zugewandten Pole in Bewegungsrichtung des Kopfes gesehen hintereinander und mit vorbestimmtem Abstand zueinander angeordnet sind und die
einen Zwischenraum begrenzen, durch welchen sich die
Windungen einer zumindest weitgehend flachen Spulenwicklung erstrecken. Ein solcher Magnetkopf ist z.B.
der europäischen Patentanmeldung EP 0 012 910 Al zu
entnehmen.

Das Prinzip der senkrechten Magnetisierung zur Speicherung von Informationen ist allgemein bekannt (vgl. z.B.
"IEEE Transactions on Magnetics", vol. MAG-16, no. 1,
Jan. 1980, Seiten 71 bis 76; DE-OS 29 24 013 oder die
genannte EP-Al). Für dieses Prinzip, das vielfach auch
als vertikale Magnetisierung bezeichnet wird, sind besondere Aufzeichnungsmedien in Form von starren Magnetspeicherplatten, flexiblen Einzelplatten (Floppy Disks)
oder Magnetbändern erforderlich. Ein entsprechendes
Aufzeichnungsmedium weist mindestens eine magnetisier-

Slm 2 Hag / 22.5.1984

bare Speicherschicht vorbestimmter Dicke auf, welche ein magnetisch anisotropes Material, insbesondere aus einer CoCr-Legierung enthält. Dabei ist die Achse der sogenannten leichten Magnetisierung dieser Schicht senkrecht zur Oberfläche des Mediums gerichtet. Mittels eines besonderen Magnetkopfes werden dann längs einer Spur die einzelnen Informationen als Bits in aufeinanderfolgenden Abschnitten, auch Zellen oder Blöcke genannt, durch entsprechende Magnetisierung der Speicherschicht eingeschrieben. In der Praxis werden im allgemeinen die magnetischen Flußwechsel, d.h. die Übergänge von einer Magnetisierungseinrichtung zur entgegengesetzten, als Informationen benutzt. Die sich so ergebenden Bits haben dabei eine vorbestimmte, auch als Wellenlänge bezeichnete Ausdehnung in Längsrichtung der Spur. Diese Ausdehnung kann im Vergleich zu der Grenze, die bei dem Verfahren der longitudinalen (horizontalen) Speicherung durch die Entmagnetisierung gegeben ist, wesentlich kleiner sein. Somit läßt sich nach dem Prinzip der senkrechten Magnetisierung die Informationsdichte in dem Aufzeichnungsmedium vorteilhaft vergrößern.

Die für das Prinzip der longitudinalen Magnetisierung bekannten Schreib- und Lese-Köpfe, d.h. Köpfe, mit denen sowohl die Schreib- als auch die Lese-Funktion auszuüben ist, können jedoch nicht ohne weiteres auch für eine senkrechte Magnetisierung eingesetzt werden. Bei Verwendung dieser Köpfe, die im allgemeinen ringkopfähnliche Gestalt haben, läßt sich zwar die auch bei dem Prinzip der senkrechten Magnetisierung angestrebte Flußführung zu einem möglichst geschlossenen Kreis mit geringem magnetischen Widerstand erreichen. Jedoch ist es schwierig, bei hohen Bit-Dichten und entsprechend kleiner Spaltweite des Ringkopfes ein hinreichend starkes Schreibfeld zu erzeugen.

Man sieht sich deshalb gezwungen, für das Prinzip der senkrechten Magnetisierung spezielle Schreib- und Lese- köpfe zu entwickeln. Eine hierfür geeignete Ausführungsform eines entsprechenden Magnetkopfes weist im allgemeinen einen sogenannten Hauptpol auf, mit dem ein hinreichend starkes senkrechtes Magnetfeld zum Ummagnetisieren der einzelnen Abschnitte der Speicherschicht erzeugt wird. Der notwendige magnetische Rückschluß kann dann z.B. mittels eines sogenannten Hilfspoles vorgenommen werden, der sich beispielsweise auf derselben Seite wie der Hauptpol befindet (vgl. z.B. "IEEE Trans. Magn.", vol. MAG-17, no. 6, Nov. 1981, Seiten 3120 bis 3122 oder vol. MAG-18, no. 6, Nov. 1982, Seiten 1158 bis 1163; "J.Appl.Phys.", vol. 53, no. 3, 1982, Seiten 2593 bis 2595; DE-OS 29 24 013 oder die genannte EP-A1).

Bei diesem z.B. aus der genannten EP-A1 bekannten Magnetkopftyp soll der Hilfspol in jedem Falle nur zur magnetischen Flußrückführung dienen. Ein eventuelles Mitschreiben dieses Poles kann gegebenenfalls zwar in Kauf genommen werden, wenn ihm der schreibende Hauptpol nacheilt und somit vom Hilfspol geschriebene Informationen überschreiben kann. Um jedoch ein Mitlesen des Hilfspoles mit seiner ablaufenden Kante zumindest weitgehend zu unterdrücken, müßte der zwischen den beiden Polen ausgebildete sogenannte Luftspalt verhältnismäßig breit sein, um eine weitgehende Reduzierung der magnetischen Flußdichte am Hilfspol gewährleisten zu können. Entsprechende breite Spaltschichten lassen sich jedoch bei in Dünnschicht-Technik zu erstellenden Magnetköpfen nur schwer realisieren. Außerdem ist das mit Magnetköpfen dieses Typs zu erhaltende Lesesignal im allgemeinen verhältnismäßig schwach, da bei diesem Typ mit nur einer einzigen Spulenwicklung sowohl die Lese- als auch die Schreibfunktion ausgeübt werden muß.

Wegen dieser Schwierigkeiten sind auch Magnetköpfe vorgeschlagen worden, bei denen auf eine Verwendung eines besonderen Hilfspoles verzichtet wird ("IEEE Trans. Magn.", vol. MAG-18, no. 6, November 1982, Seiten 1170 bis 1172; EP 0 071 489 A2). Für diesen Magnetkopftyp ist dementsprechend nur ein einziger, dem Aufzeichnungsmedium zugewandter Magnetschenkel vorgesehen, dem eine planare Schreib- und Lesespulenwicklung zugeordnet ist. Der notwendige magnetische Rückschluß erfolgt dann durch den Streufluß. Mit einem solchen, auch als Einzel-Pol-Kopf bezeichneten Magnetkopf läßt sich zwar ein hinreichend deutliches und hochfrequentes Schreibsignal erzeugen, falls die Induktivität der Spulenwicklung nicht zu hoch ist. Andererseits kann bei fehlendem Hilfspol kein ausreichend großes Lesesignal gewonnen werden.

Aufgrund dieser erwähnten Probleme beim Lesen sind auch Systeme bekannt, bei denen die Funktion des Schreibens und Lesens von jeweils getrennten Köpfen auszuüben ist. Diese Köpfe lassen sich dann an die jeweilige Funktion besser anpassen (vgl. z.B. "IEEE Trans.Magn.", vol. MAG-16, no. 5, September 1980, Seiten 967 bis 972). Dementsprechend werden für das Lesen an sich bekannte Ringköpfe verwendet, während das Schreiben mit den erwähnten Einzel-Pol-Köpfen durchzuführen ist. Ein bekannter, hierfür geeigneter Schreibkopf weist auf seiner der Speicherschicht des Aufzeichnungsmediums zugewandten Seite einen Hauptpol mit longitudinaler Ausdehnung von z.B. 3 µm auf, dem auf der Rückseite des Aufzeichnungsmediums ein wesentlich ausgedehnterer Hilfspol gegenüberliegt. Der zweite, nur zum Lesen benötigte Ringkopf hat hingegen eine Spaltweite von z.B. 0,2 µm (vgl. "IEEE Trans.Magn.", vol. MAG-17, no. 6, November 1981, Seiten 2538 bis 2540). Entsprechende Systeme zum magnetischen Lesen und Schreiben mit an die jeweilige Funktion angepaßten besonderen Köpfen sind jedoch konstruktiv verhältnismäßig aufwendig.

Aufgabe der vorliegenden Erfindung ist es deshalb, den eingangs genannten Schreib- und Lese-Magnetkopf dahingehend zu verbessern, daß bei ihm zum einen die erwähnten Probleme bei diesen kombinierten Köpfen hinsichtlich ihres mechanischen Aufbaues verringert sind und zum anderen eine schaltbare Schreib- und Lesefunktion mit jeweils verhältnismäßig hohem Wirkungsgrad zu gewährleisten ist. Insbesondere soll also eine hinreichend große Lesespannung mit diesem Magnetkopf zu erzeugen sein.

Diese Aufgabe wird erfindungsgemäß dadurch gelöst, daß der den magnetische Fluß führende Leitkörper außer dem von den beiden Magnetschenkeln ausgebildeten ringkopfähnlichen Kopfteil einen über den dem Aufzeichnungsmedium gegenüberliegenden Bereich dieses Kopfteiles hinausragenden zusätzlichen Schenkelteil enthält und daß außer der nur für die Lesefunktion dienenden Spulenwicklung eine zusätzliche Spulenwicklung nur für die Schreibfunktion vorgesehen ist, deren Windungen lediglich dem zusätzlichen Schenkelteil zugeordnet sind.

Aufgrund dieser Verlängerung des den magnetischen Fluß führenden Leitkörpers über dessen ringkopfförmigen Kopfteil hinaus mittels des zusätzlichen Schenkelteiles und der Zuordnung der zusätzlichen, nur als Schreibspule dienenden Spulenwicklung lediglich zu diesem Schenkelteil läßt sich vorteilhaft erreichen, daß der Magnetkopf quasi als Einzel-Pol-Kopf die Informationen in das Aufzeichnungsmedium schreibt. Da nämlich die Schreibspulenwicklung außerhalb des von den beiden Magnetschenkeln gebildeten ringkopfähnlichen Kopfteiles zu liegen kommt, werden in den beiden Magnetschenkeln bei der Schreibfunktion durch den Schreibstrom magnetische Flüsse hervorgerufen, die in den dem Aufzeichnungsmedium zugewandten Polen zumindest weitgehend parallel und senkrecht zur Oberfläche des Mediums gerichtet sind. Die andere, als Lesespule dienende Spulenwicklung bleibt dabei stromlos. Hingegen wird zum Lesen die Schreibspulenwicklung abgeschaltet. Der magnetische Fluß schließt sich dann bevorzugt in dem ringkopfähnlichen Kopfteil des Leitkörpers über den als Rückschluß wirkenden Verbindungsbereich der beiden Magnetschenkel. Mit der Lesespule kann dabei die induzierte Spannung abgenommen werden.

Außerdem sind die mit der erfindungsgemäßen Ausgestaltung des Magnetkopfes verbundenen Vorteile insbesondere in dem sehr einfachen Aufbau des Kopfes zu sehen. Der dem Aufzeichnungsmedium zugewandte Kopfteil besteht nämlich aus einem an sich bereits bekannten Dünnschicht-Ringkopf, während der sich auf der dem Aufzeichnungsmedium abgewandten Seite daran anschließende Kopfteil sehr einfach herstellen läßt, da komplizierte Strukturen nicht auftreten. Die Schreibspule läßt sich nämlich mit einer vorteilhaft nur geringen Windungszahl erstellen, wobei technologisch schwierige Strukturierungsprobleme bei der Herstellung dieser Spulenwicklung zu vermeiden sind. Dagegen kann die Lesespulenwicklung, die nur vernachlässigbar wenig Strom zieht, vorteilhaft sehr fein strukturiert werden. Dies bedeutet eine entsprechende Erhöhung der Lesespannung, da die Windungszahl dieser Wicklung recht hoch gewählt werden kann.

Vorteilhafte Ausgestaltungen des Magnetkopfes nach der Erfindung gehen aus den Unteransprüchen hervor.

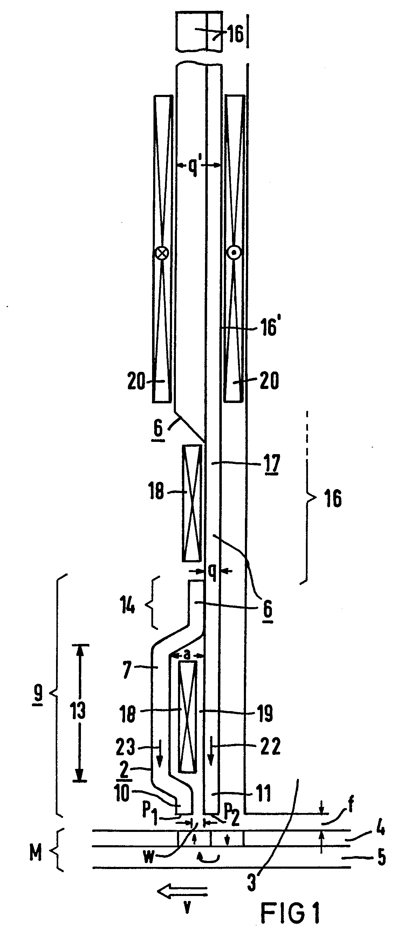

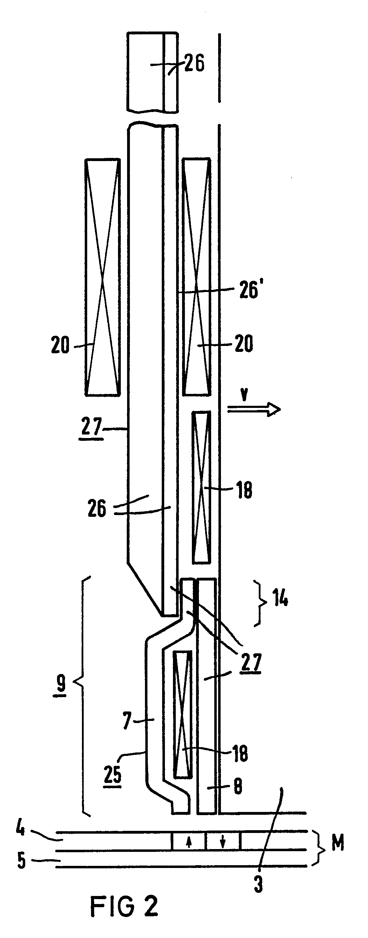

Zur weiteren Erläuterung der Erfindung und deren in den Unteransprüchen gekennzeichneten Weiterbildungen wird nachfolgend auf die Zeichnung Bezug genommen, in deren Figur 1 schematisch ein Ausführungsbeispiel eines erfindungsgemäßen Magnetkopfes als Längsschnitt veranschaulicht ist. Die Figur 2 zeigt ein weiteres Ausführungsbeispiel eines Magnetkopfes nach der Erfindung in entsprechender Darstellung.

Bei dem in Figur 1 gezeigten Magnetkopf zum Schreiben und Lesen wird von an sich bekannten ringkopfähnlichen Ausführungsformen für das Prinzip der senkrechten (vertikalen) Magnetisierung ausgegangen (vgl. z.B. die genannten EP 0 012 910 A1 oder 0 071 489 A2). Der in der Figur allgemein mit 2 bezeichnete Kopf, der während seiner Schreibfunktion gezeigt sein soll, befindet sich auf der Flachseite eines Substrates 3, das die Stirn- oder Rückseite eines gebräuchlichen, als Flugkörper bezeichneten Elementes bildet, welches in der Figur nur angedeutet ist. Dieser Kopf ist relativ zu einem an sich bekannten, vertikal zu magnetisierenden Aufzeichnungsmedium M in geringer Flughöhe f von beispielsweise 0,2 μm längs einer Spur zu führen. Das Aufzeichnungsmedium M, z.B. eine Magnetspeicherplatte, weist eine Speicherschicht 4 insbesondere aus einer CoCr-Legierung auf, die gegebenenfalls auf ihrer dem Magnetkopf 2 abgewandten Seite mit einer weichmagnetischen Schicht 5 z.B. aus einer speziellen NiFe-Legierung verbunden ist. Beispielsweise wird das Aufzeichnungsmedium
M unter dem Kopf hinweggeführt. Die entsprechende
relative Bewegungsrichtung des Aufzeichnungsmediums
bezüglich des Magnetkopfes ist durch eine mit v bezeichnete gepfeilte Linie angedeutet.

Der Magnetkopf $\underline{2}$ enthält einen den magnetischen Fluß
führenden Leitkörper $\underline{6}$ mit zwei Magnetschenkeln 7 und
8, welche einen an sich bekannten ringkopfähnlichen
Kopfteil $\underline{9}$ bilden. Diese Schenkel sind weitgehend und
insbesondere an ihren dem Aufzeichnungsmedium M zugewandten Enden 10 und 11 zumindest annähernd senkrecht
zur Oberfläche des Aufzeichnungsmediums M ausgerichtet
und bilden dort jeweils einen Magnetpol $P_1$ bzw. $P_2$.
Zwischen diesen beiden Polen ist ein Luftspalt 12 mit
einer vorteilhaft geringen longitudinalen, d.h. in
Bewegungsrichtung v weisenden Weite von unter 1 µm,
insbesondere unter 0,3 µm ausgebildet. In einem
mittleren Bereich 13 des ringkopfähnlichen Kopfteiles $\underline{9}$
ist der Abstand zwischen den beiden Magnetschenkeln 7
und 8 gegenüber der Spaltweite w erweitert, indem z.B.
der hinsichtlich der Bewegungsrichtung rückwärtige
Magnetschenkel 7 in diesem Bereich auf einen größeren
Abstand a bezüglich des vorderen, gerade ausgebildeten
und dem Substrat 3 am nächsten liegenden Magnetschenkel
8 führt. Außerhalb dieses Bereiches 13 ist auf der dem
Aufzeichnungsmedium M abgewandten Seite der Magnetschenkel 7 in bekannter Weise in einem Verbindungsbereich 14 an den Magnetschenkel 8 angefügt, so daß
sich die ringkopfähnliche Gestalt des Kopfteiles $\underline{9}$
ergibt.

Gemäß der Erfindung soll der den magnetischen Fluß
führende Leitkörper $\underline{6}$ des Magnetkopfes $\underline{2}$ nicht nur

diesen ringkopfähnlichen Kopfteil 9 umfassen, sondern darüber hinaus noch einen Schenkelteil 16 aufweisen, der sich an den dem Aufzeichnungsmedium M abgewandten Verbindungsbereich 14 des Kopfteiles 9 anschließt. Dementsprechend kann gemäß der dargestellten Ausführungsform der innenliegende, d.h. dem Substrat 3 zugewandte Magnetschenkel 8 über diesen Verbindungsbereich 14 hinaus verlängert sein. Dabei können insbesondere der Magnetschenkel 8 und der Schenkelteil 16 ein gemeinsames Bauteil 17 bilden.

Ferner soll gemäß der Erfindung für die Lesefunktion und die Schreibfunktion nach dem Prinzip der senkrechten (vertikalen) Magnetisierung jeweils eine eigene Spulenwicklung vorgesehen sein. So können sich die Windungen der insbesondere mehrlagigen, flachen Spulenwicklung 18, die lediglich als Lesespule dient, durch den zwischen den beiden Polschenkeln 7 und 8 in dem mittleren Bereich 13 ausgebildeten Zwischenraum 19 erstrecken und beispielsweise auch an einem Stück des verlängerten Schenkelteils 16 anliegen. Diese Spulenwicklung bleibt jedoch für die in der Figur angenommene Schreibfunktion stromlos. Für die Schreibfunktion dient eine weitere Spulenwicklung 20, die z.B. von einer einzigen breiten Spulenschleife oder auch von mehreren Windungen gebildet wird. Gemäß der Erfindung sollen dabei die im Ausführungsbeispiel angenommenen mehreren Windungen nur dem verlängerten Schenkelteil 16 zugeordnet sein, vorzugsweise einen Bereich 16' dieses Schenkelteils umschließen. Bei einem vorhandenen, durch die eingezeichneten Stromflußrichtungen veranschaulichten Schreibstrom verhältnismäßig großer Stärke werden dann in den beiden Polschenkeln 7 und 8 die durch gepfeilte Linien 22 und 23 angedeuteten Führungsrichtungen des magnetischen Flusses ausgebildet, die zumindest weitgehend parallel verlaufen und beispielsweise auf das Medium M hin ausgerichtet sind.
Die beiden Magnetschenkel 6 und 7 des ringkopfähnlichen
Kopfteiles 9 sind dann also wie ein Stabmagnet gepolt,
d.h., der erfindungsgemäße Magnetkopf 2 wirkt in diesem
Falle quasi wie ein Einzel-Pol-Kopf. Außer bei dieser
Schreibfunktion bleibt jedoch die Spulenwicklung 20
stromlos, so daß dann der Magnetkopf 2 mit der Spulenwicklung 18 wegen des magnetischen Rückschlusses über
den Verbindungsbereich 14 der beiden Magnetschenkel 7
und 8 als gewöhnlicher Ringkopf betrieben wird.

Wie aus Figur 1 ferner hervorgeht, weist der verlängerte Schenkelteil 16 zumindest im Bereich 16' der
Schreibspulenwicklung 20 und gegebenenfalls außerhalb
des Bereiches der an ihm anliegenden Windungen der
Lesespulenwicklung 18 einen wesentlich größeren den
magnetischen Fluß führenden Querschnitt q' auf als der
mit ihm verbundene Magnetschenkel 8 mit einem entsprechend kleineren Querschnitt q. Aufgrund der damit ausgebildeten Verjüngung des Querschnittes des verlängerten Schenkelteils 16 zwischen seinem Bereich 16' und
dem Verbindungsbereich 14 bzw. dem Magnetschenkel 8
wird vorteilhaft für die Schreibfunktion eine entsprechende Erhöhung der magnetischen Feldstärke bewirkt.

Bei der in Figur 2 gezeigten weiteren Ausführungsform
eines erfindungsgemäßen Magnetkopfes sind mit Figur 1
übereinstimmende Teile mit den gleichen Bezugszeichen
versehen. Diese Ausführungsform des allgemein mit 25
bezeichneten Magnetkopfes unterscheidet sich von dem
Magnetkopf 2 nach Figur 1 im wesentlichen nur durch die
besondere Anordnung des an den ringkopfähnlichen Kopfteil 9 angefügten besonderen Schenkelteils 26 seines den magnetischen Fluß führenden Leitkörpers 27. Dieser Schenkelteil ist nämlich in dem dem Aufzeichnungsmedium M gegenüberliegenden Verbindungsbereich 14 der beiden Magnetschenkel 7 und 8 des ringkopfähnlichen Kopfteiles 9 nicht wie gemäß Figur 1 an den dem Substrat 3 zugewandten Magnetschenkel 8, sondern an den äußeren Magnetschenkel 7 unmittelbar angefügt. Auch dieser Magnetschenkel ist zumindest im Bereich 26' seiner zugeordneten Schreibspulenwicklung 20 mit einem den magnetischen Fluß führenden größeren Querschnitt q' ausgestattet. Gemäß dem dargestellten Ausführungsbeispiel reicht der vergrößerte Querschnitt q' bis in den Verbindungsbereich 14.

Gemäß den Ausführungen nach den Figuren ist davon ausgegangen, daß die Schreibspulenwicklung 20 den jeweiligen zusätzlichen, verlängerten Schenkelteil 16 bzw. 26 umschließt. Gegebenenfalls können sich jedoch die Windungen der Schreibspulenwicklung auch als planare Struktur auf einer Flachseite des zusätzlichen Schenkelteils entsprechend der in Figur 1 gezeigten Ausführungsform der Lesespulenwicklung 18 erstrecken.

Die Herstellung der erfindungsgemäßen Magnetköpfe wird vorteilhaft in an sich bekannter Dünnschicht- bzw. Dünnfilm-Technik vorgenommen. Die hierbei verwendeten Substratkörper bestehen z.B. aus TiC und $Al_2O_3$. Zum Aufbau der Magnetschenkel werden dünne Magnetschichten aus speziellen NiFe-Legierungen wie Permalloy (Ni/Fe-81/19) oder aus weichmagnetischen amorphen Materialien, z.B. aus FeB, durch Sputtern, Aufdampfen oder galvanische Abscheidung aufgebracht und jeweils durch nicht-magnetische Zwischenlagen voneinander getrennt. Die leichte Richtung der Magnetisierung kann z.B. beim Aufbringen der jeweiligen Schicht durch ein angelegtes Magnetfeld induziert werden. Sie liegt im allgemeinen immer senkrecht zur Richtung des magnetischen Flusses in dem magnetischen Leitkörper, d.h. im Bereich der Magnetpole $P_1$ und $P_2$ im wesentlichen parallel zur Oberfläche des Aufzeichnungsmediums M. Die aufgewachsenen unterschiedlichen Schichten werden durch an sich bekannte Techniken wie Fotolithographie, Plasma-, Ionenstrahl- oder naßchemisches Ätzen strukturiert und damit die Magnetschenkel des Kopfes ausgebildet. Zur Herstellung der für die Schreib- und Lesefunktion vorgesehenen Magnetspulen werden Schichten aus Cu oder Al oder Au abgeschieden und entsprechend strukturiert. Die einzelnen für den Aufbau des Magnetkopfes erforderlichen Isolationsschichten sind in den Figuren aus Gründen der Übersichtlichkeit weggelassen.

Von besonderem Vorteil für die Fertigungstechnologie des erfindungsgemäßen Magnetkopfes ist es, daß der zur Erfüllung der Lesefunktion erforderliche Teil des Kopfes hinsichtlich seiner Formgebung und Ausführung weitgehend bisher bekannten Longitudinalköpfen entspricht.

9 Patentansprüche
2 Figuren

Patentansprüche

1. Dünnschicht-Magnetkopf zum Schreiben und Lesen mit einem schichtweisen Aufbau auf einem nicht-magnetischen Substrat für ein Aufzeichnungsmedium, das mit einer magnetisierbaren Speicherschicht versehen ist, in welche längs einer Spur Informationen durch senkrechte (vertikale) Magnetisierung der Speicherschicht einzuschreiben sind, welcher Magnetkopf einen den magnetischen Fluß führenden ringkopfähnlichen Leitkörper mit zwei Magnetschenkeln aufweist, deren dem Aufzeichnungsmedium zugewandten Pole in Bewegungsrichtung des Kopfes gesehen hintereinander und mit vorbestimmtem Abstand zueinander angeordnet sind und die einen Zwischenraum begrenzen, durch welchen sich die Windungen einer zumindest weitgehend flachen Spulenwicklung erstrecken, d a d u r c h g e k e n n z e i c h n e t , daß der den magnetischen Fluß führende Leitkörper (6, 27) außer dem von den beiden Magnetschenkeln (7, 8) ausgebildeten ringkopfähnlichen Kopfteil (9) einen über den dem Aufzeichnungsmedium (M) gegenüberliegenden Bereich (14) dieses Kopfteiles (9) hinausragenden zusätzlichen Schenkelteil (16, 26) enthält und daß außer der nur für die Lesefunktion dienenden Spulenwicklung (18) eine zusätzliche Spulenwicklung (20) nur für die Schreibfunktion vorgesehen ist, deren Windungen lediglich dem zusätzlichen Schenkelteil (16, 26) zugeordnet sind.

2. Magnetkopf nach Anspruch 1, d a d u r c h g e - k e n n z e i c h n e t , daß der über den Kopfteil (9) hinausragende Schenkelteil (16) mit einem der Magnetschenkel (8) ein gemeinsames Bauteil (17) bildet.

3. Magnetkopf nach Anspruch 1 oder 2, d a d u r c h g e k e n n z e i c h n e t , daß die zusätzliche

Schreibspulenwicklung (20) eine oder mehrere Windungen in mindestens einer Ebene aufweist.

4. Magnetkopf nach Anspruch 3, d a d u r c h  g e - k e n n z e i c h n e t , daß die mindestens eine Windung der Schreibspulenwicklung (20) den zusätzlichen Schenkelteil (16, 26) umschließt.

5. Magnetkopf nach Anspruch 3, d a d u r c h  g e - k e n n z e i c h n e t , daß die mindestens eine Windung der Schreibspulenwicklung (20) als planare Struktur zumindest teilweise an dem zusätzlichen Schenkelteil (16, 26) anliegt.

6. Magnetkopf nach einem der Ansprüche 3 bis 5, d a - d u r c h  g e k e n n z e i c h n e t , daß der über den ringkopfähnlichen Kopfteil (9) hinausragende Schenkelteil (16, 26) zumindest im Bereich (16' bzw. 26') der mindestens einen Windung der ihm zugeordneten Schreibspulenwicklung (20) einen den magnetischen Fluß führenden Querschnitt (q') aufweist, der größer ist als der Querschnitt (q) dieses Schenkelteils im Bereich (14) der Verbindung mit dem ringkopfähnlichen Kopfteil (9).

7. Magnetkopf nach einem der Ansprüche 1 bis 6, d a - d u r c h  g e k e n n z e i c h n e t , daß die Windungen der als planare Struktur ausgebildeten Lesespulenwicklung (18) auch an dem zusätzlichen Schenkelteil (16, 26) anliegen.

8. Magnetkopf nach einem der Ansprüche 1 bis 7, d a - d u r c h  g e k e n n z e i c h n e t , daß sein den Magnetfluß führender Leitkörper (6, 27) aus weichmagnetischem Material besteht.

9. Magnetkopf nach einem der Ansprüche 1 bis 8, d a -
d u r c h   g e k e n n z e i c h n e t , daß sein
den Magnetfluß führender Leitkörper (6, 27) aus einem
Material besteht, dessen leichte Magnetisierung zumindest weitgehend senkrecht zur Führungsrichtung des
Magnetflusses gerichtet ist.

FIG 1

FIG 2

**Europäisches Patentamt**

**EUROPÄISCHER RECHERCHENBERICHT**

0166031

Nummer der Anmeldung

EP 84 11 5582

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl 4) |
|---|---|---|---|
| X | PATENTS ABSTRACTS OF JAPAN, Band 6, Nr. 237 (P-157)(1115), 25. November 1982; & JP - A - 57 135 418 (FUJITSU K.K.) 21.08.1982 * Figuren 3,4 * | 1,3,5, 7 | G 11 B 5/127 G 11 B 5/31 G 11 B 5/17 |
| X | PATENTS ABSTRACTS OF JAPAN, Band 4, Nr. 39 (P-4)(521), 28. März 1980, Seite 121P4; & JP - A - 55 12 522 (FUJITSU K.K.) 29.01.1980 * Insgesamt * | 1-3,8 | |
| P,X | PATENTS ABSTRACTS OF JAPAN, Band 8, Nr. 192 (P-298)(1629), 4. September 1984; & JP - A - 5 979 412 (SUWA SEIKOSHA K.K.) 08.05.1984 * Figuren 2,3 * | 1-3,5-8 | |
| A | PATENTS ABSTRACTS OF JAPAN, Band 8, Nr. 58 (P-261)(1495), 16. März 1984; & JP - A - 58 205 916 (FUJI SHASHIN FILM K.K.) 12.01.1983 * Insgesamt * | 1,2,4, 6,8 | RECHERCHIERTE SACHGEBIETE (Int. Cl.4) G 11 B |
| A | PATENTS ABSTRACTS OF JAPAN, Band 4, Nr. 131 (P-27)(613), 13. September 1980; & JP - A - 55 84 015 (TOKYO SHIBAURA DENKI K.K.) 24.06.1980 * Insgesamt * | 1,6,8 | |
| | --- -/- | | |

Der vorliegende Recherchenbericht wurde für alle Patentansprüche erstellt.

| Recherchenort | Abschlußdatum der Recherche | Prüfer |
|---|---|---|
| DEN HAAG | 04-09-1985 | FUX J. |

Europäisches
Patentamt

**EUROPÄISCHER RECHERCHENBERICHT**

0166031

Nummer der Anmeldung

EP 84 11 5582

## EINSCHLÄGIGE DOKUMENTE

Seite 2

| Kategorie | Kennzeichnung des Dokuments mit Angabe, soweit erforderlich, der maßgeblichen Teile | Betrifft Anspruch | KLASSIFIKATION DER ANMELDUNG (Int Cl.4) |
|---|---|---|---|
| A | PATENTS ABSTRACTS OF JAPAN, Band 5, Nr. 9 (P-45)(681), 21. Januar 1981; & JP - A - 55 139 624 (TOKYO SHIBAURA DENKI K.K.) 31.10.1980 * Insgesamt * ----- | 1,8,9 | |
| | | | **RECHERCHIERTE SACHGEBIETE (Int. Cl.4)** |

Der vorliegende Recherchenbericht wurde für alle Patentansprüche erstellt.

| Recherchenort DEN HAAG | Abschlußdatum der Recherche 04-09-1985 | Prüfer FUX J. |
|---|---|---|

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82